# EUROPÄISCHE PATENTANMELDUNG

(11) **EP 0 871 350 A2**
(43) Veröffentlichungstag der Anmeldung: **14.10.1998**
(21) Anmeldenummer: 98106523.8
(22) Anmeldetag: 09.04.1998
(51) Int. Cl.: H05B 41/29, H05B 41/392

(54) **Beleuchtungsvorrichtung**

(30) Priorität: 11.04.1997 DE 29706573 U
(71) Anmelder: Steinel GmbH & Co. KG, 33442 Herzebrock-Clarholz (DE)
(72) Erfinder: Franke, Thomas, 33758 Schloss Holte-Stubenbrock (DE); Herbst, Christof, 33181 Fürstenberg (DE)
(74) Vertreter: Behrmann, Niels, Dipl.-Ing.

(57) **Zusammenfassung**

Die Erfindung betrifft eine Beleuchtungsvorrichtung mit einem elektronischen Vorschaltgerät für eine Gasentladungslampe od.dgl. Leuchtmittel, welches eine als Reaktion auf ein impulsförmiges Startsignal ein oszillierendes Betriebssteuersignal zum Ansteuern des Leuchtmittels im Leuchtbetrieb erzeugende Oszillatorbaugruppe aufweist, und einer einen elektronischen Schaltkreis aufweisenden Steuereinheit zum Steuern von Betriebszuständen der Beleuchtungsvorrichtung in Abhängigkeit von extern erfaßten oder von vorbestimmten internen Steuerparametern, wobei die Steuereinheit zusätzlich zum Erzeugen des Startsignals eingerichtet und mit der Oszillatorbaugruppe zum Anlegen des Startsignals an diese verbunden ist.

## Beschreibung

Die vorliegende Erfindung betrifft eine Beleuchtungsvorrichtung nach dem Oberbegriff des Anspruchs 1.

Eine derartige Beleuchtungsvorrichtung ist aus dem Stand der Technik etwa als Energiespar- oder Sensorleuchte bekannt, welche neben einem -- zum Betreiben einer Leuchtstoffröhre als geeigneter Gasentladungsleuchte notwendigen -- elektronischen Vorschaltgerät noch weitere Steuerelektronik aufweist, die insbesondere zur zeit-, bewegungs-, helligkeits- oder temperaturabhängigen Betriebssteuerung vorgesehen ist.

Üblicherweise weisen modernere und komfortablere Beleuchtungssteuerungen bereits eine Prozessor- oder Controllersteurung auf.

Problematisch ist bei bekannten Beleuchtungsvorrichtungen mit Leuchtstoffröhren jedoch, daß bislang die Aktivierung bzw. Deaktivierung des zugehörigen Vorschaltgeräts und mithin also auch das Ein- bzw. Ausschalten des Leuchtmittels beträchtlichen Schaltungsaufwand erfordert und, soweit das Ausschalten betroffen ist, gar das vollständige Trennen des elektronischen Vorschaltgeräts ("EVG") von der Netzbetriebsspannung.

Insbesondere im Hinblick auf die weiteren, notwendigen Elektronikkomponenten in einer modernen Sensorleuchte ist jedoch ein solches Vorgehen unbefriedigend und, im Hinblick auf zusätzlichen elektronischen Bauteileaufwand, unökonomisch und verbesserungsbedürftig.

Aufgabe der vorliegenden Erfindung ist es daher, eine gattungsgemäße Beleuchtungsvorrichtung mit EVG zu schaffen, welche im Hinblick auf ihre Betriebszustandssteuerung vereinfacht ist, einen geringeren Bauteileaufwand benötigt und darüber hinaus auch ohne vollständiges Trennen des EVG vom Netz deaktivierbar ist.

Die Aufgabe wird durch die Beleuchtungsvorrichtung mit den Merkmalen des Patentanspruches 1 gelöst.

Vorteilhaft wird dabei die Steuereinheit -- bevorzugt ein Prozessor od.dgl. -- über seine sonstigen Steuerfunktionen hinaus zum zusätzlichen Erzeugen des zum Aktivieren des Leuchtbetriebes erforderlichen Startimpulses benutzt. Hierdurch entfallen die herkömmlicherweise lediglich zu diesem Zweck erforderlichen Bauelemente, die insbesondere bei einem Großserienprodukt wie einem EVG einen beträchtlichen Rationalisierungseffekt realisieren. Üblicherweise muß zum Realisieren des Startsignals der -- ohnehin vorhandene --Prozessor lediglich eine geeignete, zusätzliche Programmierung erfahren.

Erfindungsgemäß wird dieses, von der Steuereinheit erzeugte Startsignal -- wie eine herkömmliche, diskrete Signalerzeugung -- direkt auf die entsprechende Oszillatorbaugruppe gelegt, die zum Ansteuern und Betreiben der Entladungslampe notwendig ist.

Vorteilhafte Weiterbildungen der Erfindung sind in den Unteransprüchen beschrieben.

Vorteilhaft wird die Netzversorgungselektronik des EVG gleichzeitig zur Spannungsversorgung der Steuereinheit verwendet, so daß -- teuere -- Leistungselektronik nicht doppelt bestückt werden muß.

Da zudem weiterbildungsgemäß durch das ebenfalls erzeugte Deaktivierungssignal der Steuereinheit erreicht werden kann, daß eine Trennung des EVG vom Netz zum Ausschalten des Leuchtmittels nicht mehr erforderlich ist, würde durch das erfindungsgemäße Ausschalten die Betriebsspannungsversorgung der Steuereinheit unbeeinflußt bleiben.

Gemäß einer vorteilhaften Weiterbildung der Erfindung wird die Steuereinheit benutzt, um eine Betriebssteuerung des Leuchtmittels in Abhängigkeit von einer Umgebungshelligkeit, also einen sog. Dämmerungsschalter, zu realisieren; zu diesem Zweck ist die Steuereinheit mit einem entsprechend eingerichteten Helligkeitssensor verbunden.

Auch kann es weiterbildungsgemäß erwünscht sein, jahreszeitunabhängig einen Ausschaltzeitpunkt (etwa während der Nacht) bzw. einen Einschaltzeitpunkt (am frühen Morgen bei noch dunkler Umgebungshelligkeit) für eine solche dämmerungsschaltergesteuerte Leuchte festzulegen, wobei dann erfindungsgemäß Mittel vorgesehen sind, die, unabhängig von einem jahreszeitabhängig schwankenden Helligkeitspegel, die Deaktivierung bzw. Aktivierung vornehmen. In besonders geeigneter Weise erfolgt dies im Rahmen der Erfindung dadurch, daß beispielsweise eine Brenndauer während einer vorangegangenen Betriebsperiode (z.B. während der vorangegangenen Nacht) bestimmt wird und diese als Eingangsgröße für einen aktuellen Schaltbetrieb, ggf. korrigiert um entsprechende Faktoren, benutzt werden kann.

Weitere Vorteile, Merkmale und Einzelheiten der Erfindung ergeben sich aus der nachfolgenden Beschreibung eines Ausführungsbeispiels sowie anhand der Zeichnungen; diese zeigen in
- Fig. 1:: ein Schaltbild des erfindungsgemäßen elektronischen Vorschaltgeräts gemäß einer ersten, bevorzugten Ausführungsform;
- Fig. 2:: ein prinzipielles Blockschaltbild der Funktionskomponenten in der Ausführungsform gemäß Fig. 1;
- Fig. 3:: ein Schaltbild eines herkömmlichen elektronischen Vorschaltgeräts und
- Fig. 4:: ein Blockschaltbild der Vorrichtung gemäß Fig. 3.

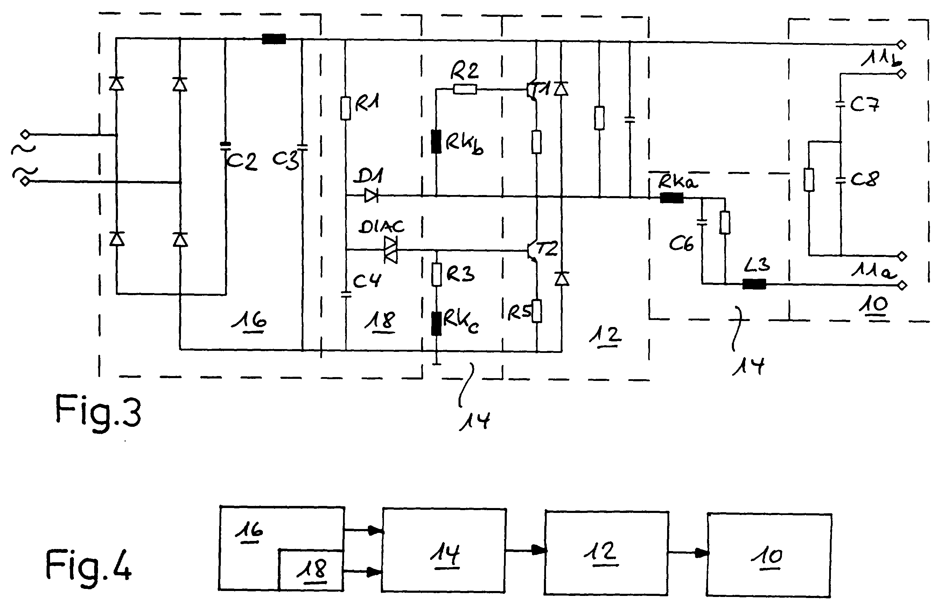

Die Schaltung und Funktionsweise von Vorschaltgeräten für Leuchstofflampen od.dgl. Entladungsleuchten ist allgemein bekannt; zur besseren Erläuterung der Erfindung soll trotzdem vorab eine kurze Beschreibung eines als bekannt vorausgesetzten elektronischen Vorschaltgeräts unter Bezug auf die Fig. 3 und 4 erfolgen.

Wie dem Blockschaltbild der Fig. 4 zu entnehmen ist, wird ein mit dem elektronischen Vorschaltgerät ("EVG") betriebenes Leuchtmittel 10 (gezeigt sind nur die Anschlüsse 11ₐ, 11_{b}), welches bevorzugt eine Leuchtstoffröhre ist, von einer Treiber- bzw. Endstufe 12 angesteuert, welcher wiederum zwei im Gegentakt betriebene Oszillatorkreise als Oszillatoreinheit 14 vorgeschaltet sind. Die Oszillatoreinheit 14 wird zum einen mit einer Gleichspannung versorgt, welche von einer Gleichrichter- und Siebeinheit 16 aus einer Netzspannung erzeugt wird, und empfängt zum anderen einen Startimpuls aus einem entsprechenden Impuls-Erzeugungsmodul 18, um den Einschalt- bzw. Leuchtbetrieb des Leuchtmittels anzustoßen und das System der Oszillatorkreise zum Schwingen anzuregen.

Ein Vorschaltgerät der in Fig. 3 und Fig. 4 gezeigten Art wird überlicherweise in Leuchten oder in sog. Energiesparlampen eingesetzt, die durch Anlegen der Netzspannung oder als Reaktion auf ein Sensorsignal ein- und wieder ausgeschaltet werden.

Ein zur Aktivierung des Leuchtbetriebs notwendiger Einschaltimpuls wird bei der Schaltung der Fig. 3 -- die entsprechenden Funktionsblöcke sind durch gestrichelte Linien umrahmt -- wie folgt erzeugt: Nach dem Anliegen der Netzspannung wird der Kondensator C4 über den Widerstand R1 geladen. Nach Erreichen der Durchbruchspannung des DIAC --dieser liegt hier bei etwa 32 Volt -- wird fast die gesamte Ladung von C4 impulsförmig auf die Basis von T2 geschaltet. Über dem DIAC entsteht dabei ein bauelementspezifischer Spannungsabfall von 1 bis 2 Volt.

Dieser Zündimpuls steuert T2 derart auf, daß ein Stromfluß von der Versorgungsspannung über Wendel 11_{b} des Leuchtmittels 10, Kondensatoren C7, C8, die Wendel 11ₐ des Leuchtmittels 10, Induktivität L3, Kondensator C6, Ringkernwicklung RKa, Transistor T2 und Widerstand R5 zum Systembezugspotential (-) entsteht. Die über RKa in den Ringkern RK eingebrachte Energie erzeugt beim Abklingen des Stromstoßes (welcher durch den Ladevorgang an C6 verursacht wird) einen Spannungsanstieg über RKb am Widerstand R2. Gleichzeitig entsteht aufgrund des unterschiedlichen Wickelsinnes der Wicklungen b und c des Ringkerns an RKc ein negatives Potential, welches über Widerstand R3 den Transistor T2 sperrt, während der Transistor T1 durchgesteuert wird.

Damit erzeugt die in C6 gespeicherte Energie einen gegenläufigen Strom durch die Leuchtmittelwendeln. Die Spannungsverhältnisse an RKc und RKb ändern sich derart, daß jetzt T2 leitet, während T1 sperrt.

Damit schwingt das System selbständig, wobei die Schwingfrequenz von der Dimensionierung von der Bauelemente abhängig ist. Eine typische Schwingfrequenz für das gezeigte Beispiel liegt bei etwa 35 KHz.

Der DIAC ist nach dem Entladen des Kondensators C4 beim oben beschriebenen Startvorgang wieder gesperrt, da der notwendige Haltestrom unterschritten wurde. Erst mit erneutem Erreichen seiner Zündspannung würde der DIAC wieder leitend. Dies wird im Schwingbetrieb aber durch die Diode D1 verhindert, die mit jedem Durchschalten von T2 den Kondensator C4 entlädt, so daß kein weiterer Startimpuls ausgelöst werden kann.

Bei dem beschriebenen Beispiel ist also der DIAC (mit R1, D1 und C4) lediglich für das Erzeugen des Startimpulses erforderlich und trägt nach dem Einschwingen nicht zum weiteren Betrieb des EVG bei. Auch kann das Schwingen nur durch Ausschalten der Versorgungsspannung beendet werden.

Erfindungsgemäß wird für ein bevorzugtes Ausführungsbeispiel der vorliegenden Erfindung die in den Fig. 3 und 4 beschriebene Vorrichtung so modifiziert, daß zum einen die Bauelemente DIAC, R1, D1 und C4 eingespart werden können, wobei durch geeignete Ansteuerung mittels einer Steuereinheit sowohl der Startimpuls für den Leuchtbetrieb als auch darüber hinaus ein Stop-Impuls auf die Basis des Transistors T2 gebracht werden.

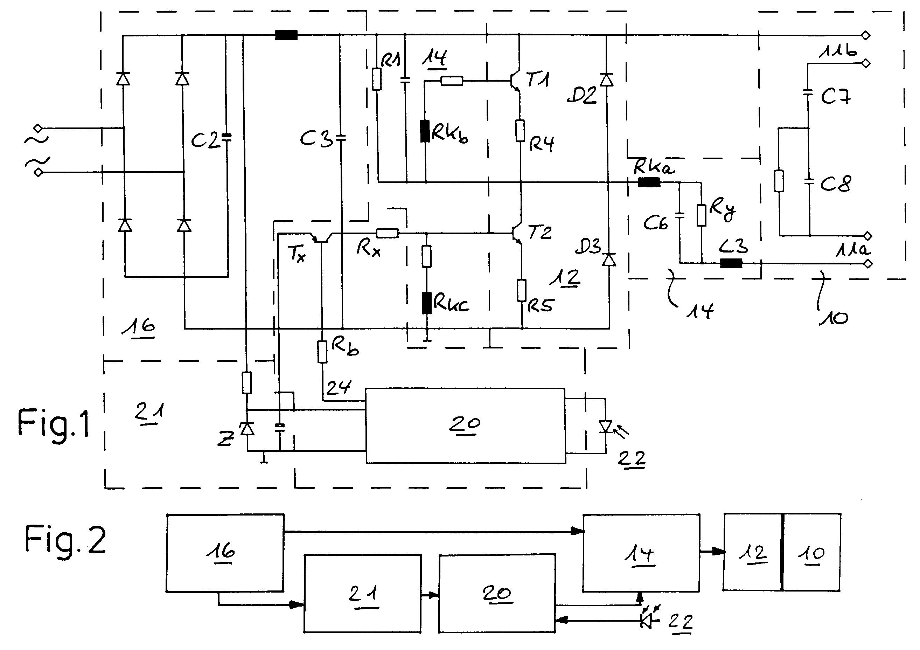

Genauer gesagt wird erfindungsgemäß die Wirkung eines -- im Rahmen von Lampensteuerungen moderner Art üblicherweise vorhandenen -- Steuermoduls ausgenutzt, um zusätzlich diese Aktivierungs- und Deaktivierungsimpulse für den Betrieb des elektronischen Vorschaltgerätes zu benutzen, so daß die für die Startimpulserzeugung ausschließlich notwendigen (und kostenträchtigen) diskreten Bauelemente eingespart werden können. Im Rahmen von Steuerungsanwendungen, wie etwa eine Dämmerungs-, Näherungs- oder Bewegungsschaltung, die mit einem entsprechenden Sensor zum gesteuerten Aktivieren oder Deaktivieren des Leuchtmittels dem EVG vorgeschaltet ist, ist überlicherweise ein Mikroprozessor, Controller od.dgl. benutzbare Signalerzeugungseinheit vorhanden. Eine solche (prozessorbasierte) Steuereinheit 20 ist dem Blockschaltbild der Fig. 2 zu entnehmen, wobei diese dann die Oszillatorstufe 14 mit entsprechenden Einschalt(Aktivierungs-) bzw. Ausschalt- (Deaktivierungs-) Signalen beaufschlagt. Vorteilhaft wird zudem die Steuereinheit 20 über ein vorgeschaltetes Spannungsversorgungs- bzw. Stabilisierungsmodul 21 versorgt, welches seinerseits die bereits vorhandene, gleichgerichtete Netzspannung der Einheit 16 ausnutzt. In der ansonsten bekannten Weise ist die Steuereinheit 20 mit einem Sensormodul als externer Parametererfassung verbunden, welches im vorliegenden Beispiel als optischer Sensor 22 zur Erfassung der Umgebungshelligkeit symbolisiert ist.

Wie dem zugehörigen Schaltbild der Fig. 1 zu entnehmen ist, ist ein Steuerausgang 24 der Steuereinheit 20 über einen Vorwiderstand R_{b} mit einem Schalttransistor Tₓ verbunden, welcher als Reaktion auf ein Signal auf dem Steuerausgang 24 durchschaltet und über Widerstand Rₓ die Basis von T2 mit einem Potential versieht, so daß ein von der Steuereinheit 20 erzeugtes Impulssignal auf die Basis von T2 wirkt. Durch diese unmittelbare Ansteuerung können die Bauelemente DIAC, C4 und R1 der Schaltung aus Fig. 1 entfallen. Zusätzlich enthält das Schaltbild der Ausführungsform gemäß Fig. 1 die mittels einer Zenerdiode Z realisierte Spannungsstabilisierung 21, und der Kondensator C6 ist mit einem Entladewiderstand R_{y} überbrückt.

Ansonsten entspricht der Aufbau dieser Ausführungsform der Schaltung in Fig. 3.

Die Funktionsweise dieser erfindungsgemäß verbesserten Schaltung ist nunmehr wie folgt:

Zum Erzeugen des Startimpulses (Aktivieren des Leuchtbetriebes) wird über den Schalttransistor Tₓ und den strombegrenzenden Widerstand Rₓ ein von der Steuerlogik 20 erzeugter, kurzer Impuls auf die Basis von T2 gegeben; hierfür reicht ein Impuls von sehr kurzer Dauer, etwa 10 µs, aus. Die dazu benötigte Energie wird von der -- entsprechend eingerichteten bzw. programmierten -- Steuerlogik 20 bereitgestellt. Grundsätzlich ähnelt also dieser Startvorgang dem oben beschriebenen, herkömmlichen Start mittels DIAC; erfindungsgemäß und vorteilhaft sind jedoch die spezifisch vorgesehenen Bauteile nicht notwendig; vielmehr wird die Impulserzeugung durch die ohnehin vorhandene Steuerlogik mit übernommen.

Danach erfolgt dann der Schwingungsbetrieb durch die im Gegentakt betriebenen Transistoren T1 bzw. T2 in der bekannten Weise.

Darüber hinaus ermöglicht vorteilhaft die vorliegende Erfindung auch das Abschalten des Schwingungs- (Leucht-) Betriebs, ohne daß etwa die Schaltung vollständig vom Netz getrennt werden muß. Das Abschalten wird erfindungsgemäß erreicht, indem ein langer Impuls (z.B. 500 µs) von der Steuereinheit 20 erzeugt und auf die Basis von T2 geschaltet wird. Hierdurch wird die Schaltung in einen quasistationären Zustand versetzt, bei welchem T2 leitet und der Stromfluß durch das Leuchtmittel nach Aufladung von C6 zum Erliegen kommt. Die im Ringkern RK gespeicherte Energie wird durch die an der Wicklung RKc entstehende negative Spannung und den dadurch gleichzeitig als Strom durch T2 erzeugten Stromfluß durch Tₓ, Rₓ, R3 und RKc abgebaut.

Auf diese Weise ist die Eigenschwingungserzeugung unterbrochen und wird auch nach dem Ende (Abschalten) des Löschimpulses nicht wieder aktiviert, da die Basis des Transistors T2 über R3 und RKc niederohmig mit dem Bezugspotential verbunden ist.

Somit wird durch Erzeugen eines entsprechend langen Steuerimpulses -- wie im Falle des Startimpulses für die Basis von T2 -- das EVG deaktiviert, mithin also der Leuchtbetrieb beendet (ohne daß etwa die Schaltung als solche vom Netz getrennt werden müßte).

Eine Wiederaktivierung des Beleuchtungsbetriebs würde dann durch die erneute Ausgabe eines Startimpulses erfolgen. Hierfür ist es jedoch notwendig, vorab C6 wieder zu entladen. Aus diesem Zweck wurde der Entladewiderstand R_{y} eingesetzt. Erfindungsgemäß ist zudem die Steuerlogik so eingerichtet (z.B. durch Vorsehen einer Totzeit), daß ein zu früher, neuer Startversuch -- vor dem ausreichenden Entladen von C6 -- verhindert wird, und erst dann ein neuer Startversuch erfolgen kann, wenn über R_{y} C6 ausreichend entladen ist. (Über R6 ist im Rahmen der vorliegenden Schaltung eine Entladung nicht möglich, da C6 mit dem wesentlich kleineren C7 in Reihe liegt und somit der Entladegleichstrom begrenzt ist).

Auf die vorbeschriebene Weise wurde erfindungsgemäß erreicht, daß das Leuchtmittel deaktiviert werden kann --also der Schwingungsbetrieb des EVG gestoppt wird -- ohne daß das komplette EVG vom Netz getrennt werden muß. Dieses ist insbesondere deswegen vorteilhaft, als im Rahmen von Lampensteuerungen der beschriebenen Art, die weitere, elektronische Komponenten besitzen, oftmals das vollständige Trennen vom Netz unvorteilhaft wäre. Zudem ergibt sich vorteilhaft die Möglichkeit, die zur Spannungsversorgung bereits im EVG enthaltenen Komponenten -- in der Fig. 1 etwa der Brückengleichrichter BR, Siebkondensator C2, Sicherung Si oder R7 -- zur Spannungsversorgung der Steuereinheit und mithin zur Deckung von deren Energiebedarf ohne zusätzlichen Bauteileaufwand zu benutzen.

Das im beschriebenen Ausführungsbeispiel am Steuerausgang 24 erzeugte Impulssignal sowohl für den Start- als auch für den Stop-Betrieb des EVG kann durch jedes beliebige, geeignete Steuermodul erzeugt werden, insbesondere auch durch diskrete oder integrierte Schaltungen, welche interne oder externe Parameter in Form von Licht-, Wärme- oder Zeitsignalen erfassen und aufbereiten, wobei geeignet etwa ein freier Ausgabekanal eines Mikrocontrollers zum Erzeugen der Start- und Stopsignale programmiert werden kann.

So liegt ein besonderes Einsatzgebiet der beschriebenen Erfindung in der Realisierung von dämmerungsschaltergesteuerten Leuchten, die nämlich auf der Basis eines geeignet vorgesehenen Helligkeitssensors (und damit abhängig von der Umgebungshelligkeit) das Leuchtmittel aktivieren oder deaktivieren.

Weiterbildungsgemäß ist vorgesehen, daß über einen zusätzlichen Einstellregler eine Ausschaltzeit während dunkler Umgebung derart festgelegt wird, daß diese Ausschaltzeit über das gesamte Jahr annähernd gleich bleibt. Zu diesem Zweck wird eine Aktivierungsdauer (Brenndauer) einer vorangegangenen Betriebsperiode bestimmt, und abhängig von einer Einstellposition des Reglers wird ein Ausschaltzeitpunkt während der Dunkelheit festgelegt. Wenn notwendig -- etwa während der dunklen Jahreszeit -- wird das Leuchtmittel dann morgens zu einem festen oder einstellbaren Zeitpunkt wieder aktiviert. Auch kann der Regler so betrieben werden, daß mit einer ersten Reglerendanschlagsposition das Leuchtmittel im Normalbetrieb arbeitet (rein umgebungshelligkeitsgesteuert), und am anderen Anschlag eine Mindestbrenndauer, etwa 1 Stunde, besitzt.

Auf diese Weise eignet sich somit die beschriebene Schaltung in hervorragender Weise zur Verwendung mit sog. Sensorleuchten, die etwa infrarot- oder radarbasierte Bewegungssensoren zur Lampensteuerung aufweisen; darüber hinaus ist die vorliegende Erfindung auch im Zusammenhang mit Energiesparleuchten geeignet, die zusätzlich ein Licht- und/oder Bewegungserfassungs-Sensorelement mit zugehöriger Auswertelektronik aufweisen.

## Patentansprüche

1. Beleuchtungsvorrichtung mit einem elektronischen Vorschaltgerät für eine Gasentladungslampe od.dgl. Leuchtmittel (10), welches eine als Reaktion auf ein impulsförmiges Startsignal ein oszillierendes Betriebssteuersignal zum Ansteuern des Leuchtmittels (10) im Leuchtbetrieb erzeugende Oszillatorbaugruppe (12, 14) aufweist, und
einer einen elektronischen Schaltkreis aufweisenden Steuereinheit (20) zum Steuern von Betriebszuständen der Beleuchtungsvorrichtung in Abhängigkeit von extern erfaßten oder von vorbestimmten internen Steuerparametern,
dadurch gekennzeichnet,
daß die Steuereinheit (20) zusätzlich zum Erzeugen des Startsignals eingerichtet und mit der Oszillatorbaugruppe (12, 14) zum Anlegen des Startsignals an diese verbunden ist.

2. Vorrichtung nach Anspruch 1, dadurch gekennzeichnet, daß die Beleuchtungsvorrichtung als Energiesparleuchte realisiert ist, wobei zur helligkeitsabhängigen Betriebssteuerung ein Helligkeitssensor (22) mit der Steuereinheit (20) verbunden ist.

3. Vorrichtung nach Anspruch 1 oder 2, dadurch gekennzeichnet, daß das elektronische Vorschaltgerät eine Netzversorgungselektronik (16) aufweist, welche zusätzlich zum Versorgen der Steuereinheit (20) geschaltet ist.

4. Vorrichtung nach einem der Ansprüche 1 bis 3, dadurch gekennzeichnet, daß das Startsignal ein Einmalimpuls ist, welcher bevorzugt eine Länge zwischen 5 und 50 Mikrosekunden aufweist.

5. Vorrichtung nach einem der Ansprüche 1 bis 4, dadurch gekennzeichnet, daß die Steuereinheit (20) zum Erzeugen eines impulsförmigen Deaktivierungssignals für die Oszillatorbaugruppe ausgebildet ist, wobei das Deaktivierungssignal eine größere zeitliche Dauer aufweist als das Startsignal.

6. Vorrichtung nach Anspruch 5, dadurch gekennzeichnet, daß das Längenverhältnis des Deaktivierungssignals bezogen auf das Startsignal etwa 100 : 1 bis 20 : 1 beträgt.

7. Vorrichtung nach einem der Ansprüche 1 bis 6, dadurch gekennzeichnet, daß die Steuereinheit (20) einen Mikroprozessor oder einen Mikrocontroller aufweist, wobei diese zum Erzeugen des Startsignals geeignet programmiert sind.

8. Vorrichtung nach einem der Ansprüche 1 bis 7, dadurch gekennzeichnet, daß die Oszillatorbaugruppe zwei, für einen Gegentaktbetrieb geschaltete Oszillatorkreise mit jeweils mindestens einem elektronischen Schaltelement (T1, T2) aufweist und die Steuereinheit zum Anlegen des Startsignals mit einem Steueranschluß (B) eines der elektronischen Schaltelemente (T2) verbunden ist.

9. Beleuchtungsvorrichtung nach einem der Ansprüche 1 bis 8, dadurch gekennzeichnet, daß die Steuereinheit zum Aktivieren und Deaktivieren des Leuchtmittels zu einem vorbestimmten, jahreszeitunabhängigen Zeitpunkt ausgebildet ist.

10. Vorrichtung nach einem der Ansprüche 1 bis 9, dadurch gekennzeichnet, daß die Steuereinheit Einstellmittel zum Vorgeben eines Einschalt- und/oder Ausschaltzeitpunkts aufweist und so ausgebildet ist, daß, als Reaktion auf einen Einstellzustand der Einstellmittel sowie auf eine erfaßte, durch Umgebungshelligkeit gesteuerte Aktivierungsdauer des Leuchtmittels während eines vorhergehenden Betriebszustandes, ein aktueller Aktivierungs- bzw. Deaktivierungszeitpunkt bestimmt wird.
